Europäisches Patentamt

European Patent Office

Office européen des brevets

(11) Veröffentlichungsnummer: **0 515 916 A2**

# EUROPÄISCHE PATENTANMELDUNG

(21) Anmeldenummer: **92108129.5**

(51) Int. Cl.5: **F16B 13/06**, F16B 13/12

(22) Anmeldetag: **14.05.92**

(30) Priorität: **27.05.91 DE 4117238**

(43) Veröffentlichungstag der Anmeldung:
**02.12.92 Patentblatt 92/49**

(84) Benannte Vertragsstaaten:
**AT BE CH DE DK ES FR GB GR IT LI LU NL PT SE**

(71) Anmelder: **Upat GmbH & Co**
**Freiburger Strasse 9 Postfach 1320**
**W-7830 Emmendingen(DE)**

(72) Erfinder: **Frischmann, Albert**
**Hürnheimweg 3**
**W-7832 Kenzingen(DE)**
Erfinder: **Rinklake, Manfred**
**Grundackerstrasse 6**
**W-7830 Emmendingen 14(DE)**
Erfinder: **Steurer, Paul**
**Belchenstrasse 9**
**W-7835 Teningen(DE)**
Erfinder: **Mermi, Kurt**
**Breitestrasse 10**
**W-7835 Teningen 2(DE)**
Erfinder: **Schnabl, Rudolf**
**Birkenweg 37**
**W-7834 Herbolzheim(DE)**

(74) Vertreter: **Rackette, Karl, Dipl.-Phys. Dr.-Ing**
**Kaiser-Joseph-Strasse 179 Postfach 1310**
**W-7800 Freiburg(DE)**

(54) **Spreizanker.**

(57) Ein Spreizanker zum Einsetzen in eine zylindrische Bohrung eines Befestigungsgrundes verfügt über zwei Spreizkonen (1, 2) mit zugeordneten Spreizringen (11, 12). Die Spreizringe (11, 12) sind mit radial überstehenden Sicken (18, 19) ausgestattet, die sich vom hinteren Rand (17) bis in den Mittelbereich der Spreizringe (11, 12) erstrecken. Von dem in Einsteckrichtung vorderen Rand (16) ausgehend sind zusätzlich zu dem durchgehenden Schlitz (13) axiale Einschnitte (14, 15) vorgesehen, die den Spreizbereich der Spreizringe (11, 12) definieren.

Fig. 1

EP 0 515 916 A2

Die Erfindung betrifft einen Spreizanker zum Einsetzen in eine zylindrische Bohrung eines Befestigungsgrundes mit einem Ankerbolzen, der am Befestigungsende ein Gewinde und am Einsteckende ein Verankerungsteil mit wenigstens einem sich zum Einsteckende hin erweiternden Spreizkonus aufweist, der am Konusende mit dem kleineren Durchmesser in einem zylindrischen Halsabschnitt mit einer Anschlagschulter und am Konusende mit dem größeren Durchmesser in eine zylindrische Überzugszone übergeht, und mit einem dem Spreizkonus zugeordneten Spreizelement, das die Gestalt eines durchgehend axial geschlitzten hülsenartigen Spreizringes mit mehreren über den Außenmantel des Spreizringes hinausragenden und entlang dem Spreizringumfang verteilten radialen Vorsprüngen hat, dessen Innendurchmesser kleiner als der größte Konusdurchmesser sowie größer als der Halsabschnittdurchmesser und dessen Außendurchmesser mindestens gleich dem größten Durchmesser des Ankerbolzens ist.

Ein derartiger Spreizanker ist aus der DE-OS 28 28 983 bekannt und gestattet ein besonders schnelles Setzen des Ankers, indem dieser einfach in ein Bohrloch eingetrieben wird. Anschließend wird der Anker im Bohrloch festgelegt, indem auf das Außengewinde des sich durch den zu befestigenden Gegenstand erstreckenden Ankerbolzens eine Mutter aufgeschraubt und fest angezogen wird. Dabei wird der Ankerbolzen mit seinen Spreizkonen in axialer Richtung bewegt, wodurch die Spreizringe gegen die Bohrlochwandung aufgespreizt werden. Die radial verformten Spreizringe drücken sich in den Befestigungsgrund, beispielsweise Beton, Vollziegel oder Kalksandstein ein und bilden dort eine Mulde. Zum Spreizen des Spreizringes muß über die Spreizkonen eine Kraft zur Dehnung aufgebracht werden. Dazu ist es erforderlich, daß der Spreizring eine ausreichende Reibung mit dem Befestigungsgrund hat. Ist dies während des Setzvorganges nicht der Fall, ergibt sich ein axialer Schlupf und ein unpräzises Setzen des Ankers. Bei einem gesetzten Spreizanker führt das Auftreten eines Risses in rißanfälligen Zugzonen dann zu einem ungenügenden Nachspreizen, wenn der Spreizring keine ausreichende Reibung mit dem Befestigungsgrund hat. Bei dem bekannten Spreizanker sind zum Verankern des Spreizringes auf dessen Außenmantel mehrere kurze dreieckige Vorsprünge vorgesehen, die in axialer Richtung im mittleren Bereich des Spreizringes angeordnet und in Richtung auf das vordere Ende des Spreizringes keilförmig verjüngt sind. Durch diese Verjüngung ergibt sich ein ungleichmäßiger Anpreßdruck und damit eine ungünstige Verkrallung, die beim Setzen des Ankers häufig dazu führt, daß die Spreizringe des bekannten Spreizankers zunächst in axialer Richtung einem Schlupf unterliegen, so daß ein Festlegen der Spreizringe beim Drehen der aufgeschraubten Mutter nicht sofort und nicht in der ursprünglichen Tiefe und Lage im Bohrloch erfolgt.

Aus der DD 249 072 A1 ist ein weiterer Spreizdübel bekannt, der radial an dem Spreizring außen angebrachte, dornenartige, dreieckige Vorsprünge aufweist, damit diese beim Anziehen des Ankers ein Mitdrehen des Spreizringes verhindern, so daß ein präzises Setzen des Dübels gewährleistet ist. Es hat sich aber gezeigt, daß eine Verkrallung der dornenartigen Vorsprünge in dem Befestigungsgrund nicht immer ausreichend ist, insbesondere, wenn das Bohrloch nicht den genauen der Ankergröße entsprechenden Durchmesser aufweist oder Unregelmäßigkeiten an der Bohrlochwandung vorhanden sind.

Desweiteren besteht durch die gezackte Ausbildung der in Einsteckrichtung vorderen inneren Kante des Spreizringes beim Beginn des Spreizvorganges die Gefahr, daß die Spitzen der Zacken sich in den Konus einbeißen, was zu einem, vom Anwender unbemerkten, fehlerhaften und unvollständigen Spreizen führen kann. Eine sichere und gleichmäßige Verankerung ist dann nicht gegeben.

Ein anderer Spreizanker ist aus der DE-OS 27 18 147 bekannt. Die Offenlegungsschrift lehrt einen Spreizring, der auf beiden Seiten spreizfähig ist und der auf der in Einsteckrichtung vorderen Seite durch einen Konus und auf der hinteren Seite durch einen angeschrägten Übergang zwischen dem hinterschnittenen Halsabschnitt, auf dem der Spreizring angeordnet ist, und dem Schaft des Bolzens gespreizt wird. Der Spreizring weist entlang des Umfanges axiale Ausstanzungen auf, in die auf dem Konus befindliche Nasen eingreifen. Durch die Ausstanzungen ist die Umfangsfläche und somit die Spreizfläche der Hülse gegen die Bohrlochwandung reduziert. Da die Tragfähigkeit eines Ankers bis zum Erreichen der Höchstlast von der Größe der Fläche, die vor Beginn des Spreizens bis zum Ende des Spreizvorganges an den Befestigungsgrund gepreßt wird, abhängt, ist durch diesen Flächenverlust eine gleichmäßige Kraftverteilung der Zuglast im Vergleich zur Spreizkraft nicht gegeben.

Darüberhinaus besteht die Gefahr, daß beim Eintreiben des Ankers der Spreizring sich ungewollt mit der Anschrägung verspannt und dadurch ein tieferes Eintreiben des Ankers in den Befestigungsgrund verhindert ist.

Durch die bei dieser Vorrichtung auftretende Zwangsspreizung des Spreizringes beim Einziehen des Ankers verspannt sich dieser an dem angeschrägten Übergang zwischen Schaft und Halsabschnitt, so daß aufgrund der resultierenden Reibverluste beim Anziehen des Ankers ein erheblich höherer Kraftaufwand für die eigentliche Spreizung der Hülse aufgebracht werden muß.

Der aus der DE 25 54 851 C2 bekannte Spreizdübel weist gleichfalls eine Vielzahl an axialen Ausstanzungen an der in Einsteckrichtung vorderen Seite auf, damit durch das relativ leichte Verbiegen der durch die Ausstanzungen getrennten Zungen die zum Aufspreizen notwendige Kraft möglichst gering gehalten wird. Die Vielzahl der Ausstanzungen führt zu erheblichen Flächenverlusten und somit zu einem ungleichmäßigen Einleiten der Zuglast in die Bohrlochwandung und zu einer unzureichenden Verankerung.

Die DE-OS 22 20 313 lehrt eine Ankerbolzenanordnung, die eine Spreizhülse mit nahe dem in Einsteckrichtung hinteren Ende angeordneten, warzenartigen Sicken aufweist, um so ein ortsfestes Anziehen des Ankers zu gewährleisten. Damit ein Aufweiten der Spreizhülse erleichtert ist, ist dem Längsspalt gegenüberliegend - von dem in Einsteckrichtung vorderen Ende aus betrachtet - ein zweiter bis über die Mitte der Hülse reichender Spalt vorgesehen, der in eine kreisförmige Öffnung mündet. Als Nachteil erweist sich der dadurch bedingte weit im hinteren Ende befindliche Drehpunkt der Spreizschalen, so daß diese steif werden und die Umformung einen gewissen Kraftaufwand benötigt.

In der DE-OS 27 20 939 ist ein selbstspreizender Dübel offenbart. Die Verwendbarkeit dieser Vorrichtung beschränkt sich allerdings auf weiche Materialien, z.B. Baustoffe schlechter Qualität, da das am unteren Ende angebrachte Blockierelement in hartem Befestigungsgrund eine Spreizbegrenzung bildet und damit eine vollständige Spreizung der Hülse verhindert.

Um das anfängliche Aufbiegen einer Spreizhülse beim Einziehen eines Konus zu erleichtern, ist in der DE-GM 71 00 768 eine Spreizhülse vorgesehen, die in unmittelbarer Nähe des in Einsteckrichtung vorderen Endes eine umlaufende Ringnut aufweist. Als Drehblockierung beim Anziehen des Ankers sind an der Hülseninnenseite sowie auf dem an diese grenzenden zylindrischen Bolzenabschnitt ineinandergreifende axiale Rillen vorgesehen. Eine zweite Nut ist entsprechend der ersten an dem gegenüberliegenden Ende der Hülse eingebracht. Bei dieser Hülsenkonstruktion hat sich als Nachteil herausgestellt, daß eine durch die Nuten bedingte Federwirkung der Hülse dahin führt, daß die resultierende Umschlingreibung ein Aufspreizen und ein leichtes Nachspreizen der Hülse in nicht ausreichendem Maße gewährleistet.

Ausgehend von dem diskutierten Stand der Technik liegt der Erfindung die Aufgabe zugrunde, einen Spreizanker der eingangs genannten Art zu schaffen, der sich sicher und schlupffrei setzen läßt, mit hohen Zugkräften belastet werden kann und in rißanfälligen Zugzonen eine dauerhafte sichere Befestigung gestattet.

Diese Aufgabe wird erfindungsgemäß dadurch gelöst, daß die Vorsprünge des Spreizringes als nach außen gewölbte Sicken ausgebildet sind, die sich ausgehend vom in Einsteckrichtung hinteren Rand des Spreizringes axial bis etwa zur Spreizringmitte erstrecken, und daß ausgehend vom in Einsteckrichtung vorderen Rand im Spreizring mehrere Einschnitte vorgesehen sind, die sich axial bis etwa zur Spreizringmitte erstrecken.

Die nach außen gewölbten Sicken bilden einen tunnelförmigen Vorsprung, der sowohl an seiner Stirnseite als auch entlang seinem parallel zur Bohrlochwandung verlaufenden Mantel günstige Verankerungen infolge eines Formschlusses und eines Reibschlusses erzielt. Dabei gestattet die Wölbung im Gegensatz zu den aus dem Stand der Technik bekannten Vorrichtungen ein elastisches Verklemmen über eine axiale Länge, die in etwa mit der Länge der Sicke übereinstimmt. Nach dem Einsetzen des Spreizankers in ein zylindrisches Bohrloch, dessen Durchmesser etwa 0,5 Millimeter größer als der Durchmesser des Ankerbolzens ist, verkrallen sich die Sicken im Befestigungsgrund. Dank der relativ großen Fläche des Sickenmantels, der mit der Bohrlochwandung in Kontakt steht, wird eine ausreichend große Gegenkraft erzeugt, so daß beim axialen Zurückziehen des Spreizkonus sofort ein Aufweiten des eingeschnittenen Bereichs des Spreizrings erfolgt. Durch die zusätzlich zum Schlitz des Spreizrings vorgesehenen Einschnitte ergibt sich, daß über den Konus nur eine verhältnismäßig kleine Kraft für die Verformung des Blechmaterials des Spreizringes aufgewandt werden muß.

Im Gegensatz zu den oben diskutierten, vorbekannten Vorrichtungen tritt durch die Einschnitte keinerlei Flächenverlust zu der zylindrischen Fläche des Bohrloches auf, so daß eine gleichmäßige Kraftverteilung der Zuglast bereits bei Beginn des Setzvorganges gewährleistet ist.

Ein zu weites axiales Verschieben des Spreizkonus gegenüber dem Spreizring führt nach einem Aufweiten des eingeschnittenen Bereichs des Spreizringes zu einem Aufweiten des durchgehenden Schlitzes, wozu jedoch ein größerer Kraftaufwand erforderlich ist, was zu höheren Traglasten führt.

Bei einem bevorzugten Ausführungsbeispiel der Erfindung sind zwei sich radial einander gegenüberliegende Sicken vorgesehen, denen zwei Einschnitte zugeordnet sind, die gegenüber dem Schlitz des Spreizrings jeweils um 120 Grad versetzt angeordnet sind. In axialer Richtung erstrecken sich die Einschnitte und die Sicken jeweils von gegenüberliegenden Rändern aus bis zur Mitte des aus einem Blechstreifen hergestellten Spreizringes. Günstige elastische Kraftverhältnisse ergeben sich, wenn der Radius des Auswölbung der Sicken

etwa halb so groß ist wie der Spreizringradius. Die Länge des Spreizringes beträgt etwa das 1,1 bis 1,5-fache des Durchmessers des Ankerbolzens und ist so gewählt, daß der Spreizring beim Anliegen gegen die Anschlagschulter am hinteren Ende des Halsabschnittes mit ihrem vorderen Ende den Konusmantel gerade berührt ohne aufgeweitet zu werden. Die Einschnitte haben dabei die Länge des Spreizkonus, so daß bei einem bestimmungsgemäßen Aufweiten lediglich ein Aufweiten im Einschnittbereich erfolgt, ohne daß der durchgehende Schlitz des Spreizringes aufgeweitet wird.

Besonders günstige Verhältnisse beim Setzen und beim Auftreten eines Risses in der Zugzone ergeben sich, wenn der Spreizkonusmantel mit einem Gleitmittel beschichtet ist. Für einen Spreizkonus und/oder einen Spreizring aus Edelstahl ist es vorteilhaft, als Gleitmittel Molybdänsulfid und als Gleitmittel für einen aus Normalstahl hergestellten Spreizkonus und/oder Spreizring Wachs zu verwenden. Die Gleitmittelbeschichtung ermöglicht es, den Konuswinkel steiler zu gestalten und somit das Verankerungsteil mit einem oder mehreren Konen zu verkürzen.

Um die Gefahr des Mitdrehens des Ankerbolzens beim Drehen der Mutter zu vermeiden, ist es zweckmäßig, eine Drehsperre zwischen dem Spreizring und dem Ankerbolzen vorzusehen. Diese ist bei einem Ausführungsbeispiel der Erfindung als axiale Profilierung in einem Abschnitt auf der Innenseite des Spreizringes und zugeordneter axialer Profilierung auf einem Halsabschnitt ausgebildet. Die Drehsperre gestattet eine leichte axiale Verschiebung, obwohl in Umfangsrichtung eine Relativbewegung zwischen dem Spreizring und dem Ankerbolzen sicher verhindert wird.

Nachfolgend wird die Erfindung anhand eines Ausführungsbeispiels beschrieben. Es zeigen:

Fig. 1    einen Spreizanker gemäß der Erfindung in einer Seitenansicht,

Fig. 2    einen Schnitt entlang der Linie II-II gemäß Fig. 1,

Fig. 3    den in ein Bohrloch in einem Befestigungsgrund eingeschlagenen und noch nicht aufgeweiteten Spreizanker im Längsschnitt,

Fig. 4    den Spreizanker gemäß Fig. 3 nach dem Spreizen der Spreizringe,

Fig. 5a    das vordere Ende des Spreizankers gemäß Fig. 3 in einer Seitenansicht mit einem entlang seinen Einschnitten geschnittenen Spreizring entlang der Linie Va-Va in Fig. 9,

Fig. 5b    eine Schnittansicht durch den Spreizanker gemäß Fig. 5a entlang der Linie Vb-Vb in Fig. 5a,

Fig. 6a    eine der Fig. 5a entsprechende Darstellung nach dem Spreizen des Spreizrings,

Fig. 6b    eine Schnittansicht entsprechend der Linie VIb-VIb gemäß Fig. 6a,

Fig. 7a    eine den Fig. 5a und 6a entsprechende Darstellung zur Veranschaulichung eines zu weiten Einziehens des Spreizkonus in den Spreizring,

Fig. 7b    eine Schnittansicht entlang einem Schnitt gemäß der Linie VIIb-VIIb in Fig. 7a,

Fig. 8    einen Querschnitt durch den Spreizanker entlang der Linie VIII-VIII in Fig. 5a,

Fig. 9    eine Draufsicht auf einen Blechstreifen zur Herstellung des Spreizringes,

Fig. 10    den Blechstreifen gemäß Fig. 9 in einem Schnitt entlang der Linie X-X und

Fig. 11    das vordere Ende des Spreizankers nach dem Aufweiten des Spreizringes in einer Seitenansicht.

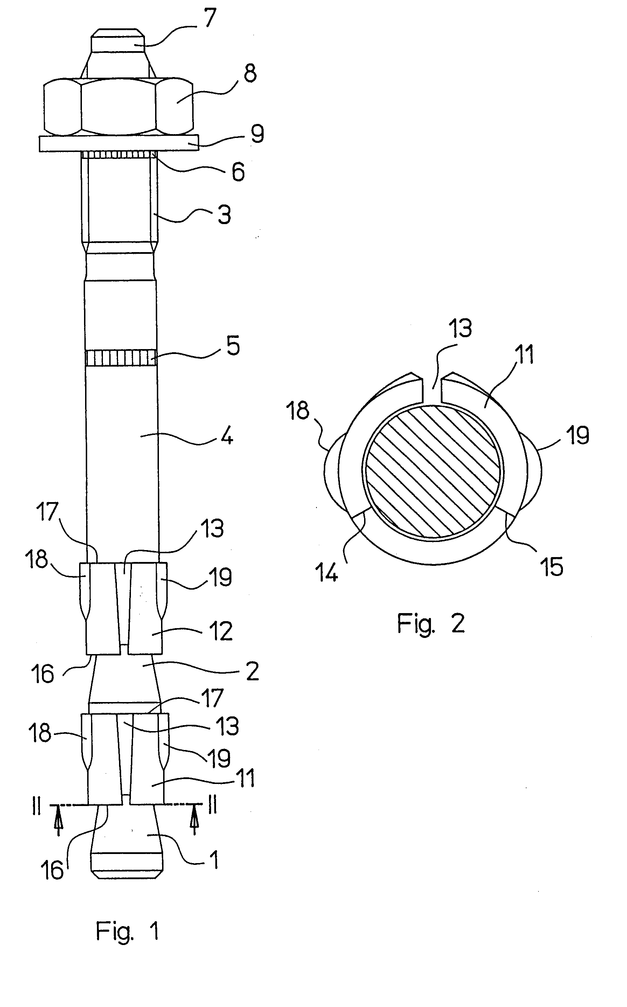

In Fig. 1 erkennt man das Ausführungsbeispiel eines Spreizankers mit einem ersten Spreizkonus 1 und einem zweiten Spreizkonus 2, die am Einsteckende des Spreizankers ein Verankerungsteil für den Spreizanker bilden. Zwischen dem Verankerungsteil und einem Gewindeabschnitt 3 befindet sich ein glatter Schaftabschnitt 4, dessen Durchmesser etwa 0,5 mm kleiner als der vorgesehene Bohrlochdurchmesser ist. Als Setzhilfen verfügt der Spreizanker über eine erste Markierung 5 und eine zweite Markierung 6.

In Fig. 1 erkennt man weiterhin eine auf das in Einsteckrichtung hintere Ende 7 des Spreizankers aufgeschraubte Mutter 8 sowie eine Unterlegscheibe 9. Den Spreizkonen 1 und 2 sind jeweils Spreizringe 11 und 12 zugeordnet. Die Spreizringe 11 und 12 sind jeweils aus einem Blechstreifen hergestellt, der zu einem Ring mit einem durchgehenden axialen Schlitz 13 gebogen ist. Die Spreizringe 11, 12 verfügen zusätzlich zum Schlitz 13 über zwei in Fig. 2 dargestellte Einschnitte 14, 15, die sich ausgehend von dem in Einsteckrichtung vorderen Rand 16 des Spreizrings in axialer Richtung etwa bis zur Mitte des Spreizrings erstrecken.

Von dem in Einsteckrichtung hinteren Rand 17 ausgehend erstrecken sich zwei in den Fig. 1 und 2 erkennbare, relativ lange Sicken 18, 19, die den Außenmantel des Schaftabschnittes 4 überragen und ein Verkrallen und Verklemmen der Spreizringe 11, 12 im zylindrischen Bohrloch gestatten, bis der Spreizvorgang eingeleitet wird.

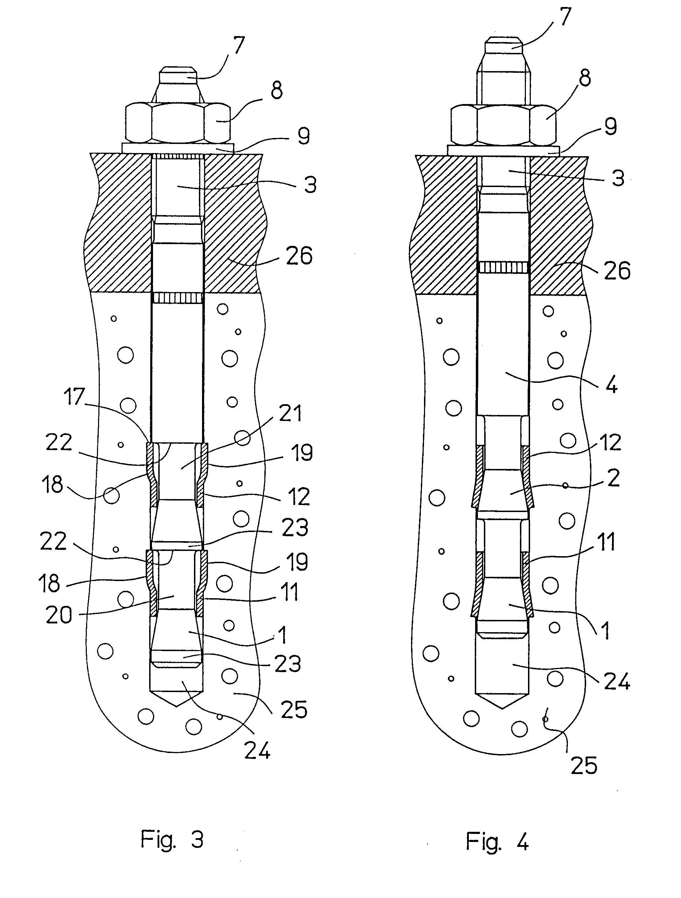

In Fig. 3 erkennt man den aus Fig. 1 bekannten Spreizanker nach dem Eintreiben in ein zylindrisches Bohrloch 24, wobei abweichend gegenüber Fig. 1 die Spreizringe 11, 12 im Längsschnitt durch die Sicken 18, 19 dargestellt sind. Fig. 3 veranschaulicht weiterhin Halsabschnitte 20, 21, die in das hintere Ende der Spreizkonen 1, 2 übergehen und an dem dem Spreizkonus 1, 2 gegenüberliegenden Ende eine Anschlagschulter 22 aufweisen. Außerdem erkennt man in Fig. 3 zylindrische Überzugszonen 23, in die die Spreizzonen 1, 2 an ihrem in Einsteckrichtung vorderen Ende übergehen.

Wie Fig. 3 zeigt, bilden die Mantelflächen der Sicken 18, 19 jeweils Kontaktbereiche, über die die Spreizringe 11, 12 bereits vor dem Aufspreizen mit einer relativ großen Fläche guten Kontakt zur Bohrlochwandung erhalten. Die Fixierung der Spreizringe 11, 12 im Bohrloch 24 erfolgt einerseits durch Kraftschluß entlang den Mantelflächen der Sicken 18 und 19 und andererseits durch Formschluß im Bereich der durch die Sicken 18, 19 am hinteren Rand 17 der Spreizringe 11, 12 gebildeten Absätze.

Der in Fig. 3 dargestellte Befestigungsgrund 25 ist vorzugsweise ein fester Baustoff, wie Vollziegel, Kalksandstein oder Beton. Das am Befestigungsgrund 25 zu befestigende Bauteil 26 wird mit Hilfe der Mutter 8 und der Unterlegscheibe 9 gegen die in Fig. 3 dargestellte Oberseite des Befestigungsgrundes 25 angedrückt.

Wenn ausgehend von der in Fig. 3 dargestellten Einschlagphase durch Drehen der Mutter 8 die Spreizphase eingeleitet wird, verbleiben die Spreizringe 11, 12 in der in den Fig. 3 und 4 dargestellten Weise an ihrer ursprünglichen und daher vorgesehenen Stelle im Bohrloch 24, während der Spreizanker mit seinen Spreizkonen 1, 2 in die Spreizringe 11, 12 hineingezogen wird. Diese weiten sich dabei in dem durch die Einschnitte 14, 15 definierten Einschnittbereich auf, so daß im Befestigungsgrund 25 kerbförmige Mulden mit einem konischen Hinterschnitt gebildet werden. Durch die relativ steile Konusfläche wird die in Einsteckrichtung vordere Spreizringkante im Vergleich zu den vorbekannten Vorrichtungen deutlich tiefer in den Befestigungsgrund eingepreßt. Der Aufweitvorgang ist beendet, wenn der Einschnittbereich aufgeweitet ist.

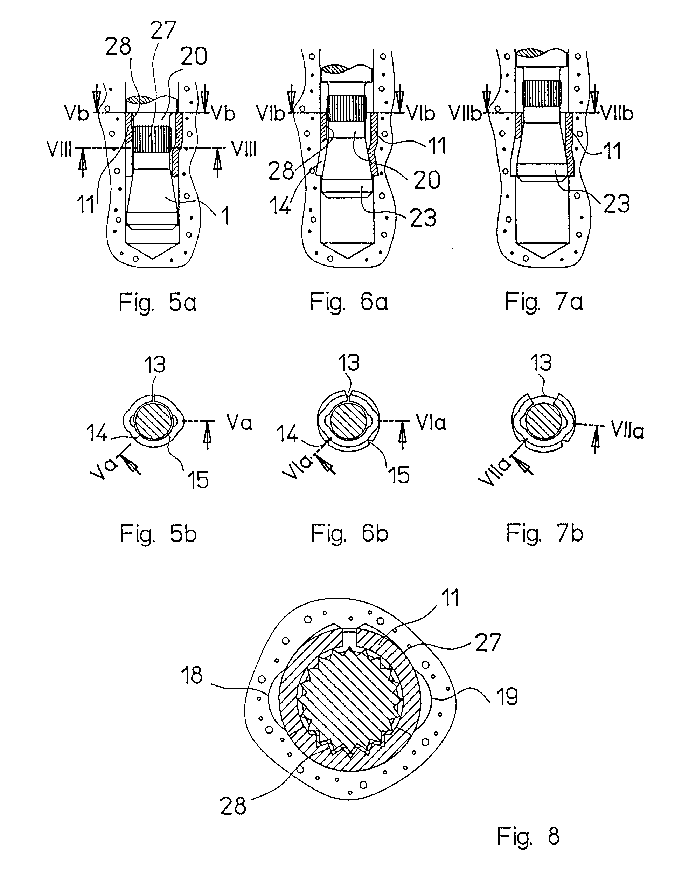

Fig. 5a zeigt das vordere Ende des Spreizankers gemäß Fig. 3 mit einem entlang den Einschnitten 14, 15 geschnittenen ersten oder einzigen Spreizring 11 zur Veranschaulichung des ungespreizten Zustands des Spreizrings 11. Außerdem erkennt man in Fig. 5a eine Halsprofilierung 27, die zusammen mit einer Spreizringinnenprofilierung 28 als Drehsperre wirkt, so daß zu Beginn des Spreizvorgangs infolge eines Aufschraubens der Mutter 8 ein Mitdrehen des Schaftes des Spreizankers vermieden wird.

Fig. 5b veranschaulicht die zu Beginn des Setzvorgangs noch geschlossenen Einschnitte 14, 15 und den durchgehenden Schlitz 13.

Fig. 6a zeigt ähnlich wie Fig. 4 den Spreizring 11 nach dem Spreizvorgang, wobei zu betonen ist, daß ein Spreizen des Spreizrings 11 nur im Bereich der Einschnitte 14, 15 erfolgt, was in Fig. 6b in einer besonderen Ansicht dargestellt ist.

Wenn ausgehend von dem Spreizzustand gemäß Fig. 6a ein weiteres Drehen der Mutter 8 erfolgt, kann es vorkommen, daß die Überzugszone 23 in den Spreizring 11 hineingezogen wird. Dabei erfolgt zusätzlich zum Aufweiten der Einschnitte 14, 15 ein Aufweiten des gesamten Spreizrings 11 mit einem Breiterwerden des Schlitzes 13. Infolge des dafür erforderlichen höheren Kraftaufwandes kann der Handwerker aufgrund des größer gewordenen Drehmoments den Übergang zu dem in den Fig. 7a und 7b dargestellten Zustand bemerken.

Die Reibung zwischen den Spreizringen 11, 12 und den Spreizkonen 1, 2 wird durch eine auf die Konusmäntel oder die Innenseiten der Spreizringe 11, 12 aufgebrachte Gleitschicht verringert. Bei einem Spreizkonus 1, 2 oder einem Spreizring 11, 12 aus Edelstahl besteht die Gleitschicht vorzugsweise aus Molybdänsulfid. Bei einem Spreizkonus 1, 2 oder einem Spreizring 11, 12 aus einem Normalstahl besteht die Gleitschicht aus Wachs. Durch die Verwendung von Gleitmitteln kann es allerdings passieren, daß beim Aufbringen des Drehmoments der Ankerbolzen mitdreht, und somit ein weiteres Spreizen bei der Montage nicht mehr möglich ist. Dies wird dadurch verhindert, daß auf dem Halsabschnitt 20 die Halsprofilierung 27 angebracht ist, die mit der Spreizringinnenprofilierung 28 verzahnt ist. Fig. 8 zeigt die auf diese Weise gebildete Drehsperre in Querschnitt.

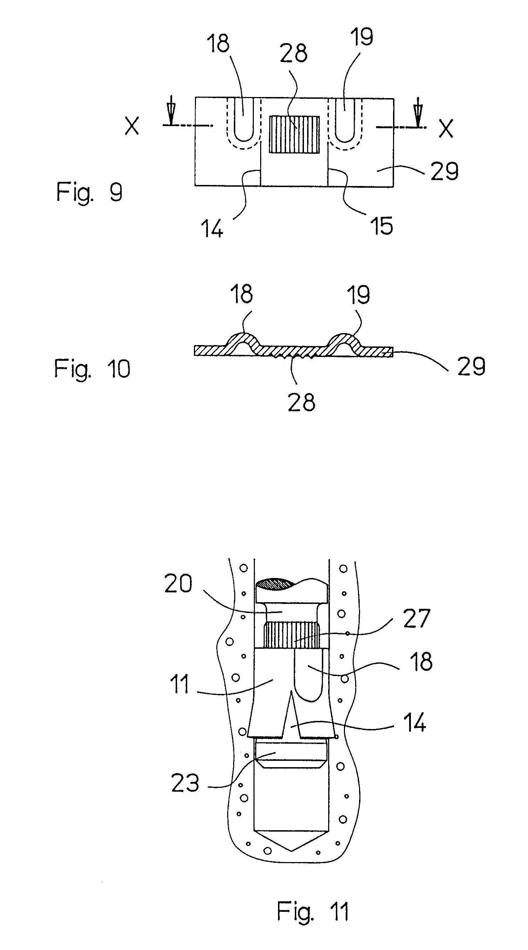

Die Spreizringe 11, 12 werden aus Blechstreifen 29 hergestellt. Fig. 9 zeigt eine Draufsicht auf einen derartigen Blechstreifen nach dem Einbringen der Sicken 18, 19 und Einprägen der Spreizringinnenprofilierung 28. In Fig. 9 erkennt man weiterhin die Einschnitte 14, 15, die von dem den Sicken 18, 19 gegenüberliegenden Ende der Spreizringe 11, 12 jeweils bis an eine gedachte Mittellinie der Spreizringe 11, 12 heranreichen. Die seitlichen Berandungen des in Fig. 9 dargestellten Blechstreifens bilden nach dem Biegen die Ränder des Schlitzes 13.

Fig. 10 veranschaulicht einen Schnitt durch den Blechstreifen 29 und zeigt einen Querschnitt durch die Sicken 18, 19, der in axialer Richtung der Sicken 18, 19 bis an deren abgerundetes Ende im wesentlichen unverändert bleibt.

Fig. 11 zeigt den bereits in den Fig. 4 und 6a dargestellten Spreizzustand in einer Ansicht zur Veranschaulichung eines aufgeweiteten Einschnitts 14, der bis in die Nähe der Sicke 18 reicht.

## Patentansprüche

1. Spreizanker zum Einsetzen in eine zylindrische Bohrung eines Befestigungsgrundes mit einem Ankerbolzen, der am Befestigungsende ein Gewinde und am Einsteckende ein Verankerungsteil mit wenigstens einem sich zum Einsteckende hin erweiternden Spreizkonus aufweist, der am Konusende mit dem kleineren Durchmesser in einem zylindrischen Halsabschnitt mit einer Anschlagschulter und am Konusende mit dem größeren Durchmesser in eine zylindrische Überzugszone übergeht, und mit einem dem Spreizkonus zugeordneten Spreizelement, das die Gestalt eines durchgehend axial geschlitzten hülsenartigen Spreizringes mit mehreren über den Außenmantel des Spreizringes hinausragenden und entlang dem Spreizringumfang verteilten radialen Vorsprüngen hat, dessen Innendurchmesser kleiner als der größte Konusdurchmesser sowie größer als der Halsabschnittdurchmesser und dessen Außendurchmesser mindestens gleich dem größten Durchmesser des Ankerbolzens ist, **dadurch gekennzeichnet,** daß die Vorsprünge des Spreizringes (11, 12) als nach außen gewölbte Sicken (18, 19) ausgebildet sind, die sich ausgehend vom in Einsteckrichtung hinteren Rand (17) des Spreizringes (11, 12) axial bis etwa zur Spreizringmitte erstrecken, und daß ausgehend vom in Einsteckrichtung vorderen Rand (16) im Spreizring (11, 12) mehrere Einschnitte (14, 15) vorgesehen sind, die sich axial bis etwa zur Spreizringmitte erstrecken.

2. Spreizanker nach Anspruch 1, dadurch gekennzeichnet, daß zwei sich radial einander gegenüberliegende Sicken (18, 19) und zwei Einschnitte (14, 15) vorgesehen sind, die in Umfangsrichtung gegenüber dem Schlitz (13) des Spreizringes (11, 12) jeweils um 120 Grad versetzt sind.

3. Spreizanker nach Anspruch 1, dadurch gekennzeichnet, daß sich die Einschnitte (14, 15) bis an den Auslaufbereich der Sicken (18, 19) erstrecken.

4. Spreizanker nach Anspruch 1, dadurch gekennzeichnet, daß der Sickenradius etwa halb so groß wie der Spreizringradius ist.

5. Spreizanker nach Anspruch 1, dadurch gekennzeichnet, daß die Länge des Spreizringes (11, 12) etwa das 1,1 bis 1,5-fache des Durchmessers des Ankerbolzens (4) beträgt.

6. Spreizanker nach Anspruch 1, dadurch gekennzeichnet, daß die Länge der Einschnitte (14, 15) gleich der Länge des Spreizkonusmantels in axialer Richtung ist.

7. Spreizanker nach Anspruch 1, dadurch gekennzeichnet, daß die Länge des Halsabschnittes (20, 21) des Spreizkonus (1, 2) etwa der Länge des Spreizringes (11, 12) entspricht.

8. Spreizanker nach Anspruch 1, dadurch gekennzeichnet, daß entweder der Spreizkonusmantel (1, 2) oder die Innenseite der Spreizringe (11, 12) oder beide mit einem Gleitmittel beschichtet sind.

9. Spreizanker nach Anspruch 8, dadurch gekennzeichnet, daß das Gleitmittel Molybdänsulfid ist.

10. Spreizanker nach Anspruch 8, dadurch gekennzeichnet, daß das Gleitmittel Wachs ist.

11. Spreizanker nach Anspruch 8, dadurch gekennzeichnet, daß der Konuswinkel 8 bis 12 Grad vorzugsweise 10 Grad beträgt.

12. Spreizanker nach Anspruch 1, dadurch gekennzeichnet, daß im Halsabschnitt (20, 21) eine axiale Profilierung (27) vorgesehen ist, die mit einer Profilierung (28) auf der Innenseite des Spreizringes (11, 12) als Drehsperre in Eingriff steht.

Fig. 1

Fig. 2

Fig. 3

Fig. 4

Fig. 5a

Fig. 6a

Fig. 7a

Fig. 5b

Fig. 6b

Fig. 7b

Fig. 8

Fig. 9

Fig. 10

Fig. 11